# FASCICULE DE BREVET EUROPEEN

(11) **EP 2 269 435 B1**
(45) Date de publication et mention de la délivrance du brevet: **09.11.2016**
(21) Numéro de dépôt: 10305713.9
(22) Date de dépôt: 01.07.2010
(51) Int. Cl.: A01C 17/00

(54) **DISPOSITIF DE DISTRIBUTION CENTRIFUGE DE PRODUITS EN GRANULES, NOTAMMENT DES ENGRAIS OU DES MOLLUSCICIDES**
VORRICHTUNG ZUR ZENTRIFUGALVERTEILUNG VON KÖRNIGEN PRODUKTEN, INSBESONDERE VON DÜNGEMITTEL ODER MOLLUSKIZIDEN
CENTRIFUGAL DISTRIBUTION DEVICE FOR GRANULATED PRODUCTS, IN PARTICULAR FERTILIZERS OR MOLLUSCICIDES

(30) Priorité: 01.07.2009 FR 0954491
(43) Date de publication de la demande: 05.01.2011
(73) Titulaire: De Sangosse SA, 47480 Pont du Casse (FR); CENTRE NATIONAL DU MACHINISME AGRICOLE DU GENIE RURAL DES EAUX ET DES FORETS (CEMAGREF), 92160 Antony (FR)
(72) Inventeur: Crebassa, Xavier, 47240, Bon Encontre (FR); Piron, Emmanuel, 03300, Creuzier Le Vieux (FR); Miclet, Denis, 03150, Varennes Sur Allier (FR); Beurrier, Vivien, 03150, Montoldre (FR)
(74) Mandataire: Cabinet BARRE LAFORGUE & associés

(56) Documents cités:
- EP-A1- 0 873 678
- DE-A1- 10 245 374
- ES-A1- 2 282 013
- US-A- 2 031 540

## Description

La présente invention concerne un dispositif de distribution centrifuge de produits en granulés.

Les engrais sont actuellement produits en granulés, quelle que soit la forme de ces granulés, de façon à permettre une distribution centrifuge. En effet, on peut disposer de granulés obtenus à partir de filières et qui sont tronçonnés au fur et à mesure de leur extrusion, pour obtenir de petits cylindres ou bien des granulés plus aplatis en forme de lentilles.

La fabrication de ces granulés est une chose mais la distribution en est une autre.

En effet, à chaque type de granulés sont rattachées des performances balistiques mais encore faut-il pouvoir les mettre en oeuvre de façon adaptée par rapport aux besoins des utilisateurs.

La présente invention a pour objet un dispositif de distribution qui permet non seulement de travailler en plein champ sur une largeur de travail donnée mais aussi d'assurer une distribution sur les bordures de champ.

En effet, il est nécessaire de distribuer les produits en granulés sur les zones concernées, d'une part pour des raisons de respect des limites des propriétés mais aussi tout simplement pour éviter toute perte de produit dispersé inutilement, ce qui représente un coût. De même, dans le respect environnemental, il convient de ne pas distribuer de granulés dans des cours d'eau jouxtant des propriétés par exemple.

On connait de ES 2 282 013, un dispositif de distribution centrifuge de produits en granulés.

Bien entendu, sur la surface concernée, il est nécessaire de répondre aux contraintes de base à savoir une régularité de la quantité distribuée mais aussi une précision et une homogénéité de la répartition au sol de cette distribution.

Les dispositifs de distribution connus et dont les caractéristiques sont ici reprises comprennent un réservoir du produit en granulés à distribuer, une alimentation du dispositif de distribution proprement dit, à partir de ce réservoir, généralement de façon gravitaire.

L'ensemble est monté sur un véhicule tracteur agricole plus ou moins sophistiqué, notamment pour le guidage afin de couvrir les zones concernées avec une superposition calculée.

Le dispositif selon la présente invention permet avec un même dispositif d'assurer une distribution régulière en mode plein champ, symétrique par rapport à l'axe de déplacement du véhicule tracteur agricole et un mode demi plein champ d'un côté et bordure de l'autre, ceci par une simple manipulation mécanique.

Le dispositif doit aussi rester dans le cadre agricole c'est-à-dire présenter une fiabilité certaine et une manipulation aisée, avec des vitesses de travail adaptées pour ne pas induire un temps de travail trop long, les plages météorologiques pour assurer un épandage étant souvent très limitées.

Le dispositif selon la présente invention est maintenant décrit selon un mode de réalisation particulier, non limitatif, en regard des dessins annexés qui sont établis à titre illustratifs.

Les réalisations industrielles peuvent être amenées à affiner les profils précis des pales et les pentes des disques en fonction des types de granulés utilisés, ceci étant à la portée de l'homme de l'art.

L'invention couvre donc un dispositif de distribution centrifuge de produits en granulés, selon la revendication 1.

Les dessins annexés incluent donc différentes figures qui représentent :
- figure 1 : une vue en perspective du dispositif de distribution, isolé, selon la présente invention
- figure 2 : une vue en éclaté des étages du dispositif de la figure 1,
- figure 3 : une vue en coupe médiane passant par l'axe du disque d'épandage,
- figure 4 : une vue de dessus schématique montrant l'alimentation en position distribution plein champ,
- figure 5 : une vue schématique des nappes d'épandage résultant de la position plein champ,
- figure 6 : une vue de dessus schématique montrant l'alimentation en position distribution demi-champ et bordure,
- figure 7 : une vue schématique des nappes d'épandage résultant de la position demi-champ et bordure.
- figure 8 : un mode de réalisation fonctionnel vu en perspective,
- figure 9 : une vue en perspective du dispositif de distribution, isolé,
- figure 10 : une vue en perspective des moyens obturateurs et des disques en perspective,
- figure 11 : une en perspective de dessus des moyens obturateurs.

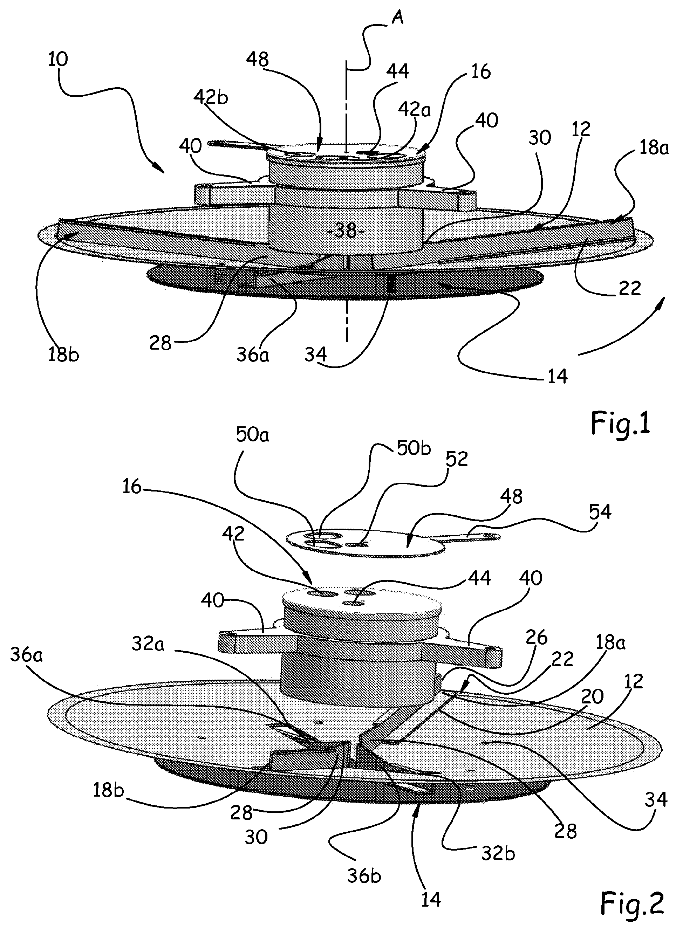

Sur la figure 1, on a représenté le dispositif 10 de distribution selon la présente invention. Ce dispositif est entraîné en rotation par rapport à son axe central A de façon connue par une motorisation, non représentée.

L'ensemble est monté sur un bâti, supporté sur un attelage arrière trois points d'un véhicule agricole généralement. L'énergie est fournie par le même véhicule agricole, l'énergie nécessaire étant d'ailleurs modeste.

Cet ensemble est enfin complété par un réservoir de produits sous forme de granulés, non représenté également car très bien connu de tous les fabricants de ce type de matériel et non directement objet de l'invention.

L'alimentation en granulés est du type gravitaire à partir du réservoir.

Le dispositif 10 de distribution proprement dit comprend deux disques 12 et 14, respectivement supérieur et inférieur, centrés sur le même axe *A*, et un boisseau 16 d'alimentation permettant la répartition des granulés ainsi qu'il sera expliqué ci-après.

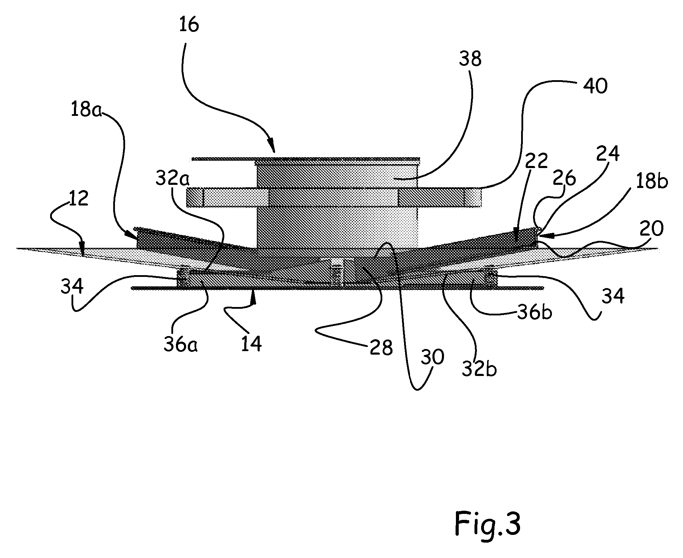

Comme montré sur les figures 1 et 3 plus particulièrement, le disque 12 supérieur est en forme de tronc de cône inversé, pointe tronquée orientée vers le bas, avec un angle de pente très faible de l'ordre de 5 à 10°.

Ce disque 12 supérieur comprend deux pales 18a et 18b dites pales plein champ dans le mode de réalisation retenu. Chacune de ces pales est disposée sensiblement de façon radiale par rapport au disque supérieur, sur sa face supérieure, et à 180° l'une de l'autre.

Chaque pale 18a et 18b plein champ présente une section en S, la branche 20 inférieure du S venant sur la surface supérieure du disque supérieur et étant solidarisée de façon adaptée par exemple par soudage ou rivetage.

La surface active de la branche 22 verticale du S est la face 24 qui est opposée à la branche 20 inférieure dudit S*.*

La branche 26 supérieure du S est de largeur très inférieure à celle de la branche 20 inférieure. Elle forme juste une casquette pour accompagner le granulé dans la pale.

Chaque pale 18a et 18b plein champ est de forme sensiblement rectangulaire mais l'extrémité proximale de ces pales, c'est-à-dire proche du centre, comporte une extension 28 dont l'arête 30 supérieure est horizontale pour coopérer de façon ajustée avec le boisseau 16. L'extrémité distale de chaque pale vient en coïncidence avec la périphérie du disque supérieur qui la porte.

Le disque 12 supérieur comprend en outre deux fenêtres 32a et 32b, de forme sensiblement rectangulaire, placées chacune en aval de chaque pale 18a et 18b, plein champ par rapport au sens de rotation choisi, dans le cas présent, le sens anti-horaire.

Chaque fenêtre 32 est positionnée de façon radiale, l'angle au centre qui sépare chaque fenêtre 32 de chaque pale 18 restant faible de l'ordre de 20 à 30° pour donner un ordre d'idées.

Ces deux fenêtres 32 sont telles que chacune de leurs extrémités proximales est débouchante au centre et chacune de leurs extrémités distales est au droit de la périphérie du disque 14 inférieur.

On peut aussi, suivant une variante, réaliser une fenêtre unique sur 360° car les granulés distribués sont cueillis par les pales 18 dès leur chute comme il sera expliqué ci-après. Dans ce cas, le problème du positionnement des fenêtres ne se pose plus puisque l'ouverture est totale.

Le disque 14 inférieur est un disque plan et de diamètre inférieur à celui du disque supérieur dans le mode de réalisation retenu. Les caractéristiques géométriques sont adaptées par l'homme de l'art pour assurer un épandage en adéquation avec la largeur de travail recherchée.

Ce disque 14 inférieur est lié au disque 12 supérieur par des entretoises 34 rigides, régulièrement réparties.

Des pales 36a et 36b dites de bordure, sont rapportées sur ce disque 14 inférieur.

Ces pales 36a et 36b sont sensiblement radiales, de profil en S également, agencées comme les pales 18a et 18b précédentes, mais horizontales puisqu'elles sont portées par le disque plan, lui-même horizontal.

L'agencement géométrique angulaire du disque 14 inférieur par rapport au disque 12 supérieur est tel que les pales 36a et 36b sont positionnées au droit de chaque fenêtre 32a et 32b.

L'écart séparant les deux disques 12 et 14, la hauteur des pales 36 de bordure est étudiée pour que les extrémités proximales de ces pales 36 de bordure se situent à un niveau inférieur de celui des extrémités proximales des pales 18 plein champ supportées par le disque supérieur.

Le boisseau 16 est l'élément distributeur.

Le boisseau 16 est composé d'un corps 38, en l'occurrence cylindrique, muni de pattes 40 de fixation indexable.

Ce corps 38 est équipé de conduits 42 de délivrance des granulés vers les pales 18 plein champ et de conduits 44 de délivrance des granulés vers les pales 36 de bordure, seules étant visibles les entrées de ces conduits sur la partie supérieur du corps 38.

On constate une symétrie de répartition avec trois paires de conduits 42a et 42b de délivrance et trois conduits 44. Chaque paire de conduits 42 est associée à un conduit 44 unique.

Les entrées des conduits 42 de délivrance vers les pales plein champ sont disposées en périphérie du boisseau et les conduits 44 de délivrance vers les pales bordure sont disposés de façon plus centrale.

Sur le boisseau 16 d'alimentation, le dispositif comporte un obturateur 48 mobile entre deux positions PC/PC (Plein Champ/ Plein Champ) ou PC/B (Plein Champ/Bordure).

Cet obturateur 48 comprend une paire de lumières 50a et 50b disposées en périphérie et une lumière 52 disposée en partie centrale.

Les lumières 50 et 52 ont une géométrie apte à découvrir les conduits d'alimentation 42 et 44.

Dans la position PC/PC, l'obturateur 48 libère, par ses lumières 50a et 50b, les entrées des deux conduits 42a et 42b d'alimentation des pales plein champ tandis que ledit obturateur ferme l'entrée du conduit 44 d'alimentation des pales de bordure.

On note que les entrées des conduits 42 se trouvent au droit des extrémités juxtaposées des lumières 50 oblongues.

Dans la position PC/B, l'obturateur 48 libère, par sa seconde lumière 50b, l'entrée du second conduit 42b d'alimentation des pales 18 plein champ et libère, par sa lumière 52 unique, l'entrée 44 d'alimentation des pales 36 de bordure correspondant à la paire de lumières 50.

Pour manoeuvrer l'obturateur 48 en rotation, il est prévu un bras 54 indexé à actionnement manuel ou automatisé.

Les trois séries symétriques d'entrées permettent de choisir en fonction des contraintes d'agencements, la série qui convient.

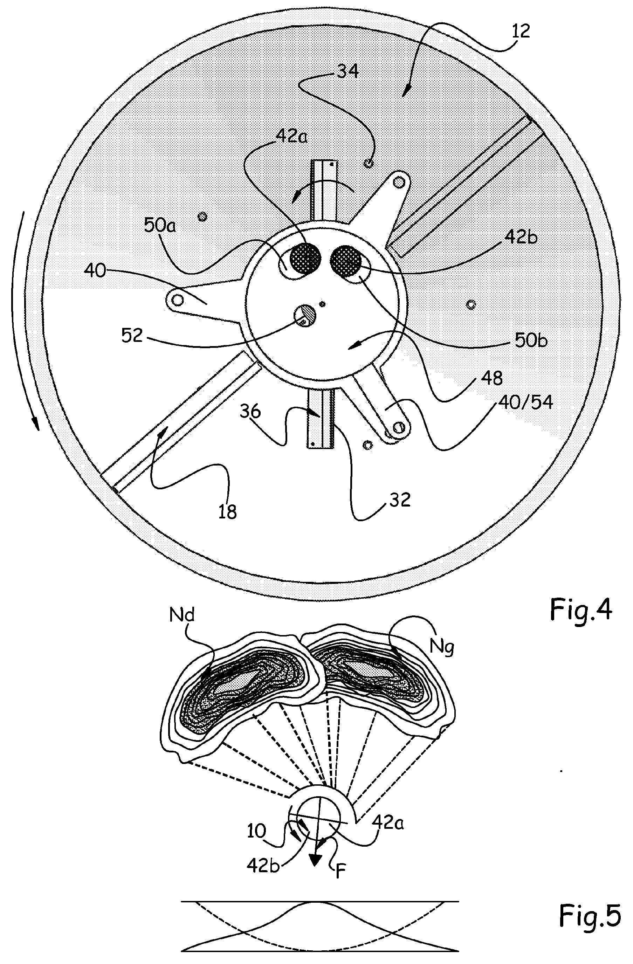

Le résultat obtenu par la mise en oeuvre du dispositif 10 selon la présente invention, dans les deux configurations est maintenant décrit en détail en s'appuyant sur les figures 4 à 7.

Les figures 4 et 5 concernent la configuration en mode PC/PC (Plein Champ/Plein Champ). Ce mode vise à épandre le produit en deux nappes droite Nd et gauche Ng par rapport au sens d'avancement du véhicule agricole portant le dispositif selon l'invention, sens d'avancement symbolisé par la flèche F.

Dans cet agencement les deux lumières 50a et 50b sont en superposition avec les entrées 42a et 42b si bien que le disque 12 supérieur est alimenté par les deux conduits d'alimentation.

Les pales 18a et 18b sont alimentées chacune, à leur tour, par chacune des deux alimentations si bien que les deux pales 18a et 18b éjectent la même quantité de granulés distribuée mais avec un léger décalage angulaire si bien que la distribution est retardée de façon à constituer des nappes d'épandage Nd par le conduit ayant l'entrée 42a et Ng par le conduit ayant l'entrée 42b de façon symétrique par rapport à l'axe d'avance symbolisé par la flèche F.

Les granulés sont uniquement convoyés par les pales 18a et 18b puisque les conduits débouchent dans la zone périphérique du boisseau et sont éjectés par la force centrifuge. Les granulés ne passent pas à travers les fenêtres 32 et ne sont donc pas accompagnés par les pales de bordure 36a et 36b.

Les passages successifs du véhicule agricole suivant des lignes de circulation parallèle prévoient généralement un léger recouvrement, identique à celui des deux nappes entre elles, le long de l'axe de symétrie.

On obtient ainsi le diagramme de la figure 5 dans lequel on constate une distribution homogène plein champ sur toute la surface traitée, pour la largeur de travail donnée.

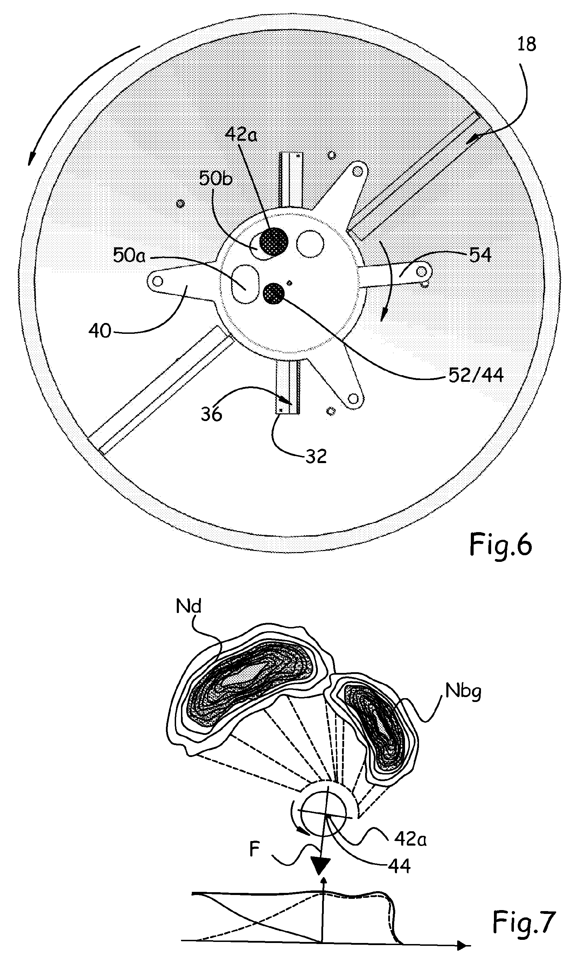

Les figures 6 et 7 concernent la configuration en mode PC/B (Plein Champ/Bordure). Ce mode vise à épandre le produit en deux nappes la première nappe de plein champ droite Nd et la seconde nappe de bordure gauche Nbg, avec une répartition différente de part et d'autre de l'axe de symétrie par rapport au sens d'avancement du véhicule agricole portant le dispositif selon l'invention, sens d'avancement symbolisé par la flèche F.

Dans cet agencement, l'obturateur est pivoté et une des deux entrées, à savoir l'entrée 42b, est occultée pour supprimer la nappe Ng. L'entrée 42a reste en superposition avec la lumière 50b si bien que le disque 12 supérieur est alimenté par un seul 42a des deux conduits d'alimentation pour former la nappe Nd.

Les pales 18a et 18b sont alimentées chacune, à leur tour, par la même alimentation unique si bien que les deux pales éjectent la même quantité de granulés mais sans décalage angulaire si bien que la distribution est d'un seul côté de façon à constituer la nappe Nd d'épandage disposé du côté droit par rapport à l'axe d'avance symbolisé par la flèche F, comme représenté sur la figure 7. Pour une nappe gauche, on agirait de façon symétrique.

Les granulés alimentent les pales 18a et 18b du disque 12 supérieur puisque le conduit d'alimentation en service débouche dans la zone périphérique du boisseau et sont éjectés par la force centrifuge.

De plus, la lumière 52 vient simultanément en superposition avec l'entrée 44 qui se trouve donc alimentée.

Cette entrée est celle du conduit d'alimentation qui débouche dans la zone plus centrale ouverte au sein du disque 12 supérieur.

De fait, les granulés approvisionnent directement les pales 36a et 36b disposées sur le disque 14 inférieur. Les granulés sont dès lors éjectés par les pales 36a et 36b portées par ce disque.

L'orientation angulaire, la longueur des pales, le dosage, la vitesse de rotation identique à celle du disque supérieur auquel il est lié, sont tels que les granulés éjectés forment une nappe de bordure gauche Nbg comme montré sur la figure 7.

Il se produit un léger recouvrement de la nappe droite Nd plein champ avec la nappe droite Nd plein champ du passage précédent puisque le véhicule a tourné, si bien que la zone de demi plein champ reçoit exactement la même densité de produit.

Quant à la zone de bordure, elle reçoit directement le bon dosage et équiréparti du fait que le travail est effectué sur une plus faible largeur. De plus, le travail est orienté différemment de sorte que la nappe, sensiblement elliptique à chaque tour, est tangente à la limite de propriété par l'extrémité arrière du petit rayon de l'ellipse.

On obtient ainsi le diagramme de la figure 7 dans lequel on constate une distribution homogène à fonction carrée sur la bordure.

Bien entendu, il est possible de réaliser un épandage demi plein champ gauche et un épandage bordure droit en inversant l'agencement, en fonction des besoins.

Le dispositif selon l'invention est décrit selon un mode de réalisation particulier mais non limitatif car il est possible de modifier certains éléments tels que le nombre de pales, les angles respectifs, les diamètres, les formes des pales en fonction des besoins, des applications et des types de granulés utilisés.

De même, la combinaison d'un boisseau/obturateurs peut être remplacée par tout organe remplissant les mêmes fonctions et conduisant aux mêmes résultats.

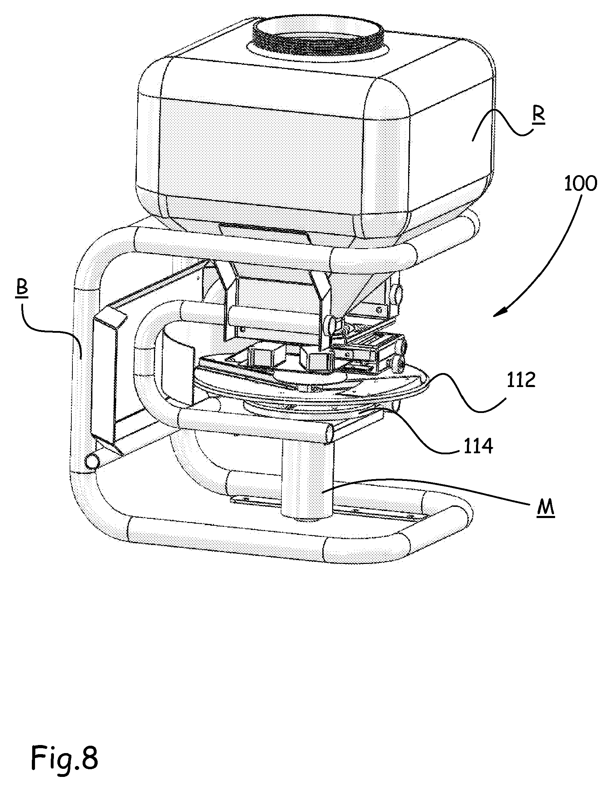

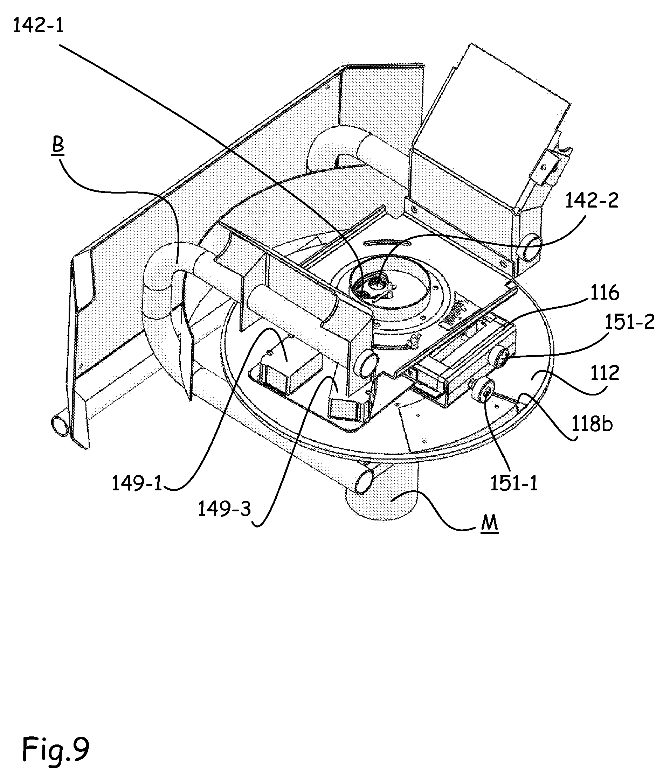

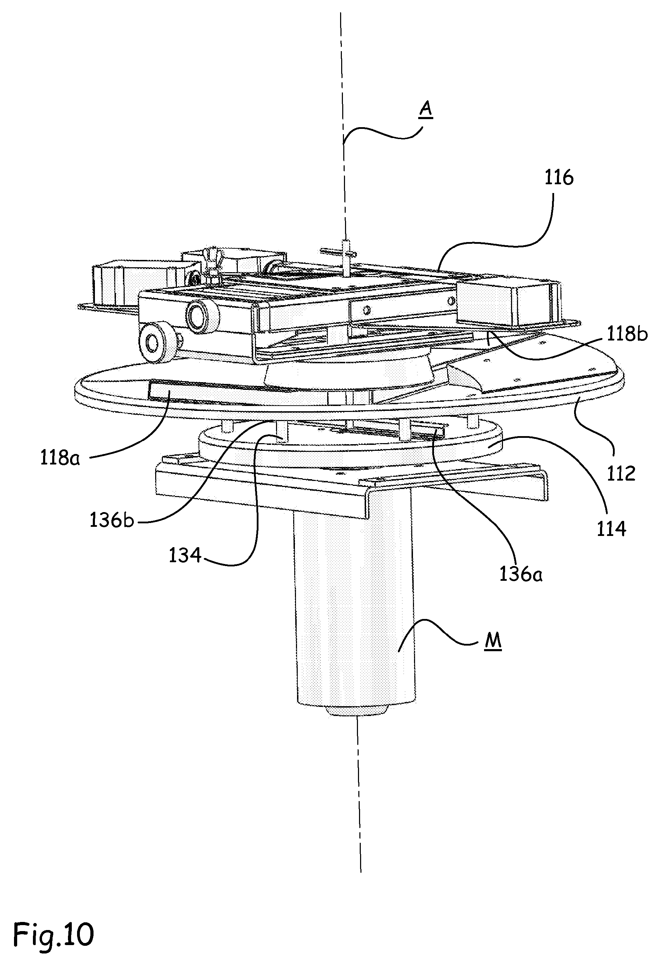

C'est ainsi que sur les figures 8 à 11, on a représenté une réalisation fonctionnelle avec des obturateurs indépendants, permettant un réglage de l'ouverture de chacun des conduits d'alimentation.

Sur les différentes figures de ce mode de réalisation, les références des éléments identiques sont conservées mais augmentées de 100.

Sur la figure 1, l'ensemble est monté sur un bâti B, complété par un réservoir R de produits sous forme de granulés.

L'alimentation en granulés est du type gravitaire à partir du réservoir R.

La motorisation est référencée M et se trouve être généralement un moteur hydraulique alimenté par le circuit hydraulique du tracteur agricole auquel est lié le bâti B.

La description qui suit est effectuée en regard des figures 8-11 indifféremment.

Le dispositif 100 de distribution proprement dit comprend deux disques 112 et 114, respectivement supérieur et inférieur, centrés sur le même axe A, et un des moyens 116 d'alimentation permettant la répartition des granulés.

Ce disque 112 supérieur comprend de même deux pales 118a et 118b, les pales plein champ. La forme est conique avec les mêmes fenêtres.

De façon générale, les dispositions constructives sont conservées à l'identique dans le principe par rapport au mode général décrit ci-avant, seules les formes de certains éléments représentées sur les dessins pouvant varier, liées à des ajustements industriels à la portée de l'homme de l'art.

Le disque 114 inférieur est un disque plan toujours de diamètre inférieur à celui du disque supérieur.

Ce disque 114 inférieur est lié au disque 112 supérieur par des entretoises 134 rigides, régulièrement réparties.

Des pales 136a et 136b dites de bordure, sont rapportées sur ce disque 114 inférieur.

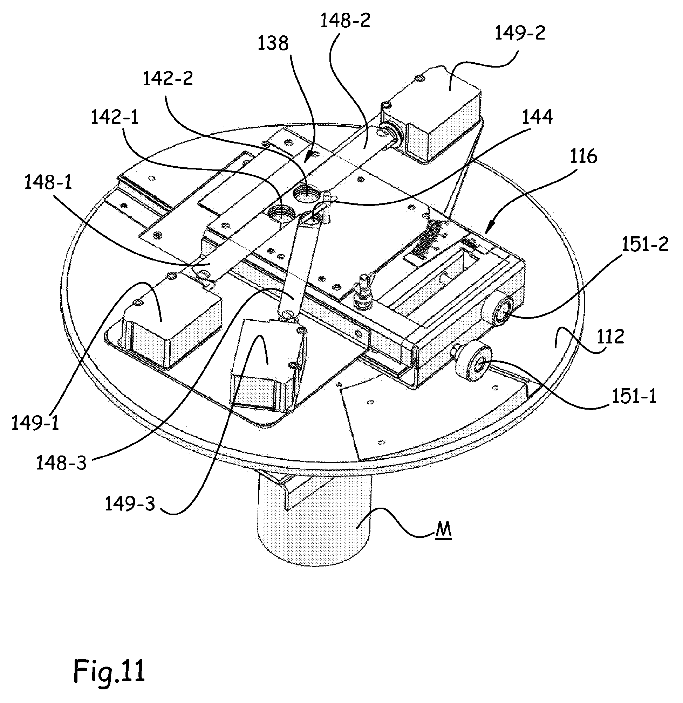

Les moyens 116 distributeur/doseur particulièrement visibles sur la figure 11, ils assurent l'alimentation des disques en granulés, avec le bon dosage.

Ces moyens 116 distributeur/doseur sont composés d'une platine 138, en l'occurrence parallélépipédique.

Cette platine 138 comprend au moins un jeu de conduits 142 de délivrance des granulés vers les pales 118 plein champ et un conduit 144 de délivrance des granulés vers les pales 136 de bordure, seules étant visibles les entrées de ces conduits sur la partie supérieure de la platine 138.

Les entrées des conduits 142 de délivrance vers les pales plein champ sont disposées en périphérie par rapport à l'axe A et l'entrée du conduit 144 de délivrance vers les pales bordure est disposée de façon plus centrale.

Ces moyens 116 distributeur/doseur comportent, pour chaque entrée de conduit un obturateur 148-1 à 148-3 mobile en translation de façon à pouvoir obturer l'entrée de chaque conduit 142, 144, en tout ou partie.

Chaque obturateur comprend une motorisation 149-1 à 149-3, électrique de préférence, qui agit sur l'obturateur de façon à le déplacer en translation.

Ainsi, suivant le pilotage des obturateurs 148-1 et 148-2 des deux conduits 142-1 et 142-2 d'alimentation des pales plein champ et de l'obturateur 148-3 de l'entrée du conduit 144 d'alimentation des pales de bordure, on obtient les distributions recherchées.

La platine 138 est également réglable en orientation et en excentration par rapport à l'axe A de façon à permettre tous les ajustements, des moyens de réglage sous forme de molettes 151-1 et 151-2 restant accessibles à l'opérateur pour ces différents mouvements.

De la même façon, en variante non conforme à l'invention, il est possible de modifier l'agencement en supprimant le disque inférieur et en ne conservant que les deux pales car elles tournent suffisamment vite pour distribuer les granulés de façon adaptée.

## Revendications

1. Dispositif de distribution centrifuge de produits en granulés, notamment des engrais, des molluscicides, associé à un véhicule agricole se déplaçant suivant une direction F, comprenant :
- un disque (12,112) supérieur comportant au moins une pale (18,118), et ;
- un disque (14,114) inférieur comportant au moins une pale (36,136), les disques supérieur (12,112) et inférieur (14,114) étant superposés et solidaires l'un de l'autre ;
- des moyens (16,116) de distribution de granulés comportant deux entrées (42,142) d'alimentation du disque (12,112) supérieur et une entrée (44,144) d'alimentation du disque (14,114) inférieur, et ;
- au moins un obturateur (48,148) d'entrées d'alimentation :
**caractérisé en ce que** :
∘ dans une première position, dite position plein champ, dudit au moins un obturateur (48,148), les deux entrées (42,142) d'alimentation du disque (12,112) supérieur sont actives et permettent de former une nappe d'épandage Nd plein champ droite et une nappe d'épandage Ng plein champ gauche par rapport au sens d'avancement du véhicule agricole et l'entrée (44,144) d'alimentation du disque (14,114) inférieur est inactive, le disque (14,114) inférieur ne distribuant pas de granulés, et ;
∘ dans une deuxième position, dite position demi plein champ et de bordure, dudit au moins un obturateur (48,148), une seulement des deux entrées (42,142) du disque supérieur est active et permet de former une nappe d'épandage Nd plein champ droite ou une nappe d'épandage Ng plein champ gauche et l'entrée (44,144) d'alimentation du disque inférieur est active et permet de former une nappe de bordure gauche Nbg ou une nappe de bordure droite Nbd respectivement.

2. Dispositif selon la revendication 1, **caractérisé en ce que** le disque (12,112) supérieur est de forme tronconique, pointe en bas.

3. Dispositif selon l'une des revendications 1 ou 2, **caractérisé en ce que** le disque (14,114) inférieur est de diamètre inférieur à celui du disque (12,112) supérieur.

4. Dispositif selon l'une des revendications 1 à 3, **caractérisé en ce que** le disque (12) supérieur comprend des fenêtres (32) de sorte à laisser passer les extrémités proximales des pales (36) portées par le disque (14) inférieur.

5. Dispositif selon l'une des revendications 1 à 3, **caractérisé en ce que** le disque (12) supérieur comprend une ouverture sur 360° de sorte à laisser les pales (36) accessibles.

6. Dispositif selon l'une des revendications 1 à 5, **caractérisé en ce que** les moyens (16) de distribution comprennent un boisseau avec au moins deux lumières (50) disposées en partie périphérique et au moins une lumière (52) disposée en partie centrale.

7. Dispositif selon l'une des revendications 1 à 5, **caractérisé en ce que** les moyens (116) de distribution comprennent une platine (138) avec au moins un jeu de conduits (142) de délivrance des granulés vers les pales (118) plein champ et un conduit (144) de délivrance des granulés vers les pales (136) de bordure, les entrées des conduits (142) de délivrance vers les pales plein champ étant disposées en périphérie par rapport à un axe A de rotation des disques (12,112) supérieur et (14,114) inférieur et l'entrée du conduit (144) de délivrance vers les pales (136) de bordure étant disposée de façon plus centrale.

8. Dispositif selon la revendication 7, **caractérisé en ce que** les moyens (116) de distribution comportent, pour chaque entrée de conduit un obturateur (148-1 à 148-3) mobile en translation de façon à pouvoir obturer l'entrée de chaque conduit (142, 144), en tout ou partie.

9. Dispositif selon l'une des revendications 1 à 8, **caractérisé en ce que** les conduits d'alimentation issus des entrées (42,142) débouchent sur le disque (12,112) supérieur, au droit des pales (18,118) et le conduit d'alimentation issu de l'entrée (44,144) débouche à travers le disque (12,112) supérieur sur le disque (14,114) inférieur, au droit des pales (36,136).

## Patentansprüche

1. Vorrichtung zur zentrifugalen Verteilung von Granulatprodukten, insbesondere Dünger, Schneckengiften, in Verbund mit einem in Richtung F fahrenden landwirtschaftlichen Fahrzeug, die Folgendes umfasst:
- einen oberen Teller (12, 112) mit mindestens einem Flügel (18, 118), und;
- einen unteren Teller (14, 114) mit mindestens einem Flügel (36, 136), wobei der obere (12, 112) und untere (14, 114) Teller übereinander gelagert und miteinander fest verbunden sind;
- einen Verteilungsmechanismus (16, 116) für Granulat, mit zwei Speisungszugängen (42, 142) für den oberen Teller (12, 112) und einem Speisungszugang (44, 144) für den unteren Teller (14, 114), und;
- mindestens einen Verschluss (48, 148) für die Speisungszugänge:
**dadurch gekennzeichnet, dass**:
-- in einer ersten Position, so genannten Position "voller Streuradius", des besagten mindestens einen Verschlusses (48, 148) die beiden Speisungszugänge (42, 142) des oberen Tellers (12, 112) aktiv sind und es ermöglichen, einen rechtsseitigen Streufächer Nd mit vollem Streuradius und einen linksseitigen Streufächer Ng mit vollem Streuradius bezüglich der Fahrtrichtung des landwirtschaftlichen Fahrzeugs zu bilden, und der Speisungszugang (44, 144) des unteren Tellers (14, 114) inaktiv ist, wobei der untere Teller (14, 114) kein Granulat verstreut, und;
-- in einer zweiten Position, so genannten Position "halber Streuradius und Randbereich", des besagten mindestens einen Verschlusses (48, 148) nur einer der beiden Zugänge (42, 142) des oberen Tellers aktiv ist und es ermöglicht, einen rechtsseitigen Streufächer Nd mit vollem Streuradius oder einen linksseitigen Streufächer Ng mit vollem Streuradius zu bilden, und der Speisungszugang (44, 144) des unteren Tellers aktiv ist und es ermöglicht, jeweils einen Streufächer am linken Rand Nbg beziehungsweise einen Streufächer am rechten Rand Nbd zu bilden.

2. Vorrichtung nach Anspruch 1, **dadurch gekennzeichnet, dass** der obere Teller (12, 112) eine abgestumpfte Kegelform mit der Spitze nach unten besitzt.

3. Vorrichtung nach einem der Ansprüche 1 oder 2, **dadurch gekennzeichnet, dass** der untere Teller (14, 114) einen geringeren Durchmesser als jener des oberen Tellers (12, 112) besitzt.

4. Vorrichtung nach einem der Ansprüche 1 bis 3, **dadurch gekennzeichnet, dass** der obere Teller (12) Fenster (32) umfasst, sodass sie die proximalen Enden der dem unteren Teller (14) aufsitzenden Flügel (36) passieren lassen.

5. Vorrichtung nach einem der Ansprüche 1 bis 3, **dadurch gekennzeichnet, dass** der obere Teller (12) eine 360° abdeckende Öffnung umfasst, sodass sie die Flügel (36) zugänglich lässt.

6. Vorrichtung nach einem der Ansprüche 1 bis 5, **dadurch gekennzeichnet, dass** der Verteilmechanismus (16) einen Durchlass mit mindestens zwei Öffnungen (50), die im Randbereich angeordnet sind, und mindestens eine Öffnung (52), die im Zentrum angeordnet ist, umfasst.

7. Vorrichtung nach einem der Ansprüche 1 bis 5, **dadurch gekennzeichnet, dass** der Verteilmechanismus (116) eine Platte (138) mit mindestens einem Zuleitungssatz (142) für Granulat in Richtung der Flügel (118) für vollen Streuradius und eine Zuleitung (144) für Granulat in Richtung der Flügel (136) für den Randbereich umfasst, wobei die Zugänge für die Zuleitungen (142) in Richtung der Flügel für den vollen Streuradius in Bezug auf eine Rotationsachse A des oberen (12, 112) und unteren (14, 114) Tellers im Randbereich angeordnet sind, und der Zugang für die Zuleitung (144) in Richtung der Flügel (136) für den Randbereich mehr mittig angeordnet ist.

8. Vorrichtung nach Anspruch 7, **dadurch gekennzeichnet, dass** der Verteilmechanismus (116) für jeden Zuleitungszugang mit einem beweglichen Schiebeverschluss (148-1 bis 148-3) versehen ist, um den Zugang zu jeder Zuleitung (142, 144) ganz oder teilweise verschließen zu können.

9. Vorrichtung nach einem der Ansprüche 1 bis 8, **dadurch gekennzeichnet, dass** die von den Zugängen (42, 142) ausgehenden Speisungszuleitungen an den Flügeln (18, 118) auf den oberen Teller (12, 112) münden und die vom Zugang (44, 144) ausgehende Speisungszuleitung an den Flügeln (36, 136) über den oberen Teller (12, 112) auf den unteren Teller (14, 144) mündet.

## Claims

1. Centrifugal distribution device for granulated products, in particular fertilizers or molluscicides, associated with an agricultural vehicle moving in a direction F, including:
- an upper disc (12, 112) comprising at least one vane (18, 118), and;
- a lower disc (14, 114) comprising at least one vane (36, 136), the upper disc (12, 112) and lower disc (14, 114) being superimposed and secured to each other;
- distribution means (16, 116) for distributing granules comprising two supply inlets (42, 142) feeding the upper disc (12, 112) and one supply inlet (44, 144) feeding the lower disc (14, 114), and;
- at least one supply inlet shutter (48, 148):
**characterised in that**:
-- in a first position, named full field position, of said at least one shutter (48, 148), the two supply inlets (42, 142) feeding the upper disc (12, 112) are active and allow for the formation of a right full field spreading layer Nd and for a left full field spreading layer Ng in relation to the forwards direction of the agricultural vehicle and the supply inlet (44, 144) feeding the lower disc (14, 114) is inactive, the lower disc (14, 114) not distributing granules, and;
-- in a second position, named half-field and edge position, of said at least one shutter (48, 148), only one of the two supply inlets (42, 142) feeding the upper disc is active and allows for the formation of a right full field spreading layer Nd or a left full field spreading layer Ng and the supply inlet (44, 144) feeding the lower disc is active and allows for the formation of a left edge layer Nbg or a right edge layer Nbd respectively.

2. A device according to claim 1, **characterised in that** the upper disc (12, 112) is frustoconical in shape with its tip pointing downwards.

3. A device according to one of claims 1 or 2, **characterised in that** the lower disc (14, 114) has a diameter of less than that of the upper disc (12, 112).

4. A device according to one of claims 1 to 3, **characterised in that** the upper disc (12) comprises windows (32) so as to allow for the passage of the proximal ends of the vanes (36) carried by the lower disc (14).

5. A device according to one of claims 1 to 3, **characterised in that** the upper disc (12) comprises a 360° aperture so as to make the vanes (36) accessible.

6. A device according to one of claims 1 to 5, **characterised in that** the distribution means (16) comprise a hopper with at least two openings (50) positioned in the peripheral portion and at least one opening (52) positioned in the central portion.

7. A device according to one of claims 1 to 5, **characterised in that** the distribution means (116) comprise a plate (138) with at least one set of granule dispensing conduits (142) dispensing granules towards the full field vanes (118) and one granule dispensing conduit (144) dispensing granules towards the edge vanes (136), the inlets of the dispensing conduits (142) to the full field vanes being positioned at the periphery in relation to a rotational axis A of the upper disc (12, 112) and lower disc (14, 114) and the inlet of the dispensing conduit (144) to the edge vanes (136) being positioned in a more central manner.

8. A device according to claim 7, **characterised in that** the distribution means (116) comprise, for each conduit inlet, a shutter (148-1 to 148-3) capable of moving in translation so as to wholly or partially block the inlet of each conduit (142, 144).

9. A device according to one of claims 1 to 8, **characterised in that** the supply conduits from the inlets (42, 142) open out onto the upper disc (12, 112), at the level of the vanes (18, 118) and the supply conduit from the inlet (44, 144) opens out through the upper disc (12, 112) onto the lower disc (14, 114), to the right of the vanes (36, 136).
